# EUROPEAN PATENT SPECIFICATION

(11) **EP 2 856 410 B1**
(45) Date of publication and mention of the grant of the patent: **25.09.2019**
(21) Application number: 13726777.9
(22) Date of filing: 31.05.2013
(51) Int. Cl.: G06Q 30/02

(54) **A METHOD FOR SIGNALING WHETHER A PART OF A WEB PAGE IS VISIBLE TO A USER AND DEVICE**
VERFAHREN ZUR SIGNALISIERUNG, OB EIN TEIL EINER WEBSITE FÜR EINEN BENUTZER SICHTBAR IST, UND VORRICHTUNG
PROCÉDÉ PERMETTANT DE SIGNALER SI UNE PARTIE D'UNE PAGE WEB EST VISIBLE PAR UN UTILISATEUR ET DISPOSITIF CORRESPONDANT

(30) Priority: 31.05.2012 US 201261653647 P
(43) Date of publication of application: 08.04.2015
(73) Proprietor: Meetrics GmbH, 10178 Berlin (DE)
(72) Inventor: SCHUMACHER, Hendrik, 12437 Berlin (DE)
(74) Representative: Bittner, Thomas L.
(86) International application number: PCT/EP2013/061311
(87) International publication number: WO 2013/178805

(56) References cited:
- Prestol: "How to tell if a DOM element is visible in the current viewport?", Stackoverflow , 24 September 2008 (2008-09-24), Retrieved from the Internet: URL:https://stackoverflow.com/questions/12 3999/how-to-tell-if-a-dom-element-is-visib le-in-the-current-viewport [retrieved on 2018-02-02]

## Description

The present disclosure refers to a computer-implemented method for signaling whether a part of a web page is visible to a user within a browser viewport of a browser window on a screen of a display device of the computer system, and a device.

### Background

A computer monitor available for showing application data is called a "screen". A user using his computer's browser may have a desktop layout on his monitor. On the screen there can be windows of multiple applications, one being a "browser window". Webpages rendered by the browser are shown inside a subarea of the browser window that is called a "browser viewport". Besides the browser viewport a browser window may contain elements used for navigation or information, such as the menu bar, the toolbar or the status bar.

When a user opens a webpage in his computer's browser the webpage may be only visible partially in the browser viewport. The visible part of the webpage can be changed by scrolling the webpage inside the browser viewport or by resizing the browser window. Webpages usually consist of layout elements like images or text paragraphs that take up a certain part of the webpage area. For an application running on the webpage, for example client side scripts, it may be of interest if a layout element is inside the browser viewport or not and thus visible to the user or not. This information is for example necessary to find out if an advertisement has become visible or not and may affect the price that has to be paid by the advertiser for placing the ad on the webpage.

According to the state of the art, the visibility of a layout element is determined by comparing the position and size of the layout element to the position and size of the browser viewport. All coordinates used are relative to the upper left corner of the webpage that thus composes the origin of a virtual coordinate system with the dimensions X and Y. This approach is not always possible if the layout element whose visibility needs to be determined is located inside an inline frame (or "iframe"). An iframe is basically a webpage inside another webpage, subsequently called the "top page". The iframe is shown inside a viewport that composes a partial area of the top page. Typically iframes are used to encapsulate certain content that should be loaded and processed separately. Because an iframe content may come from any origin (any resource available on the internet) any communication between the iframes may have severe security implications. To protect the security of the users all major browsers enforce significant restrictions on data access between the top page and an iframe or different iframes if the top page and the iframe or different iframes originate from different domains, so called "cross domain policy" or "cross domain restrictions".

Because of the cross domain restrictions an application running in an iframe originating from the domain a.com may not read any data from a top page originating from the domain b.com. Just disregarding the lack of information would produce the same deductions about the visibility of one layout element inside one iframe and another layout element inside another iframe that is obviously not visible to the user. Since online advertisements are often placed inside iframes to ensure encapsulation there is a strong need for a solution for this problem to get representative information about the visibility of an advertisement.

There exist a few proposals that come with severe limitations each.

It was proposed to run an automated browser that loads the webpage or install an extension into the browsers of users browsing the internet. From the browser it is possible to access both the top page and the iframe. In this case no cross site restrictions occur. The collected information has to be extrapolated statistically. Unfortunately this solution is very expensive and it is hard to get data about real (representative) user interaction.

Also, it was proposed to use security holes in certain browsers to circumvent the security limitations for cross domain iframes. Such implementations are not only short-lived since the security holes may be closed at any time but they also endanger the privacy of the users since security restrictions are in place for a reason.

It is also possible to place another iframe inside the iframe that is served from the same domain as the top page. Such an iframe is called an iframe buster. Using this further iframe as an intermediary it is possible to communicate between the content iframe and the top page. Setting up an iframe buster is a very expensive task because every domain the top page may be coming from has to be adapted. It is also opening up the top page for manipulations endangering the privacy of the top page's users.

A method for signalling whether a part of a web page is visible to user within a browser viewport of a browser window has been proposed (Prestol: "How to tell if a DOM element is visible in the current viewport?", Stackoverflow, 24 September 2008 (2008-09-24), Retrieved from the Internet: URLS:https://stackoverflow.com/questions/123999/how-to-tell-if-a-domelement-is-visible-in-the-current-viewport [retrieved on 2018-02-02]).

### Summary

It is an object to provide improved technologies for signaling whether a part of a web page is visible to a user on a screen of a display device of a computer system. Especially, reliable information shall be gathered about actual visibility of the part of the web page inside an inline frame.

A computer-implemented method according to claim 1 is provided.

According to another aspect, a device is provided for signaling whether a part of a web page is visible to a user within a browser viewport of a browser window on a screen of a display device of the computer system on which a browser application is running.

The proposed technologies provide a very inexpensive way without endangering users' privacy. There are two separate steps of determining data, the first one using a base for the coordinates of the screen, the second one using information about the rendering of the inline frame (iframe) content. By using both processes together it is possible to get very accurate data about the visibility of layout elements inside inline frames.

The step of determining position data may comprise at least one of determining a screen position of the browser window and determining a screen position of the inline frame.

The screen position of the browser viewport may be determined based on a screen position of the browser window.

The size and / or the visibility of at least one of a menu bar, a tool bar and a status bar of the browser window may be taken into account when determining the screen position of the browser viewport.

The step of determining whether the part of the web page is located within the viewport may comprise the steps of determining whether the inline frame is located within the viewport, and determining whether the part of the web page is located within the inline frame.

The step of determining rendering data may comprise a step of hooking into an event that gets called every time content of the inline frame is drawn.

The step of determining rendering data may comprise a step of checking a count that is incremented every time the inline frame is drawn.

### Description of further embodiments

Following, further embodiments will be described, by way of example, with reference to figures. In the figures show:
- Fig. 1: a schematic representation of a screen of a display device of a computer system,
- Fig. 2: another schematic representation of the screen in Fig. 1,
- Fig. 3: another schematic representation of the screen in Fig. 1,
- Fig. 4: another schematic representation of the screen in Fig. 1,
- Fig. 5: a schematic representation of a screen of a display device of a computer system, and
- Fig. 6: a schematic diagram for a method for signaling whether a part of a web page is visible to a user within a browser viewport of a browser window on a screen of a display device of the computer system.

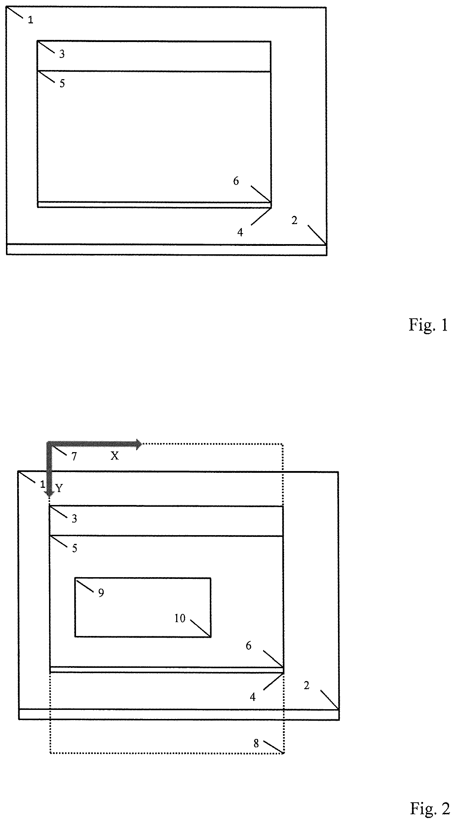

Referring to Fig 1 to 4, general aspects of displaying information on a screen of a display device of a computer system in conjunction with a running web browser application are explained.

A user using his computer's browser usually has a desktop layout on his monitor that is similar to the one shown in Fig. 1. The area of the computer monitor available for showing application data is called a "screen". In Fig. 1 that is the rectangle described by 1 as the upper left and 2 as the lower right corner. On the screen there can be windows of multiple applications, one being a "browser window". In Fig.1 that is the rectangle described by 3 as the upper left and 4 as the lower right corner. Webpages rendered by the browser are shown inside a subarea of the browser window that is called a "browser viewport". In Fig. 1 that is the rectangle described by 5 as the upper left and 6 as the lower right corner. Besides the browser viewport a browser window contains elements used for navigation or information, such as the menu bar, the toolbar or the status bar.

As shown in Fig. 2, when a user opens a webpage in his computer's browser the webpage (in Fig. 2 that is the rectangle described by 7 as the upper left and 8 as the lower right corner) is usually only visible partially in the browser viewport. The visible part of the webpage can be changed by scrolling the webpage inside the browser viewport or by resizing the browser window. Webpages usually consist of layout elements like images or text paragraphs that take up a certain part of the webpage area. In Fig. 2 that is the rectangle described by 9 as the upper left and 10 as the lower right corner.

For an application running on the webpage, for example client side scripts, it may be of interest if a layout element is inside the browser viewport or not (and thus visible to the user or not). This information is for example necessary to find out if an advertisement has become visible or not and may affect the price that has to be paid by the advertiser for placing the ad on the webpage.

According to the state of the art, the visibility of a layout element is determined by comparing the position and size of the layout element (in Fig. 2 that is the rectangle described by 9 as the upper left and 10 as the lower right corner. to the position and size of the browser viewport (see the rectangle described by 5 as the upper left and 6 as the lower right corner in Fig. 2). All coordinates used are relative to the upper left corner of the webpage (that is 7 in Fig. 2) that thus composes the origin of a virtual coordinate system with the dimensions X and Y.

This approach is not always possible if the layout element whose visibility needs to be determined is located inside an inline frame (or "iframe"). An iframe is basically a webpage inside another webpage subsequently called the "top page". The iframe is shown inside a viewport that composes a partial area of the top page. Typically iframes are used to encapsulate certain content that should be loaded and processed separately. Because an iframe content may come from any origin (any resource available on the internet) any communication between the iframes may have severe security implications. To protect the security of the users all major browsers enforce significant restrictions on data access between the top page and an iframe or different iframes if the top page and the iframe or different iframes originate from different domains, so called "cross domain policy" or "cross domain restrictions".

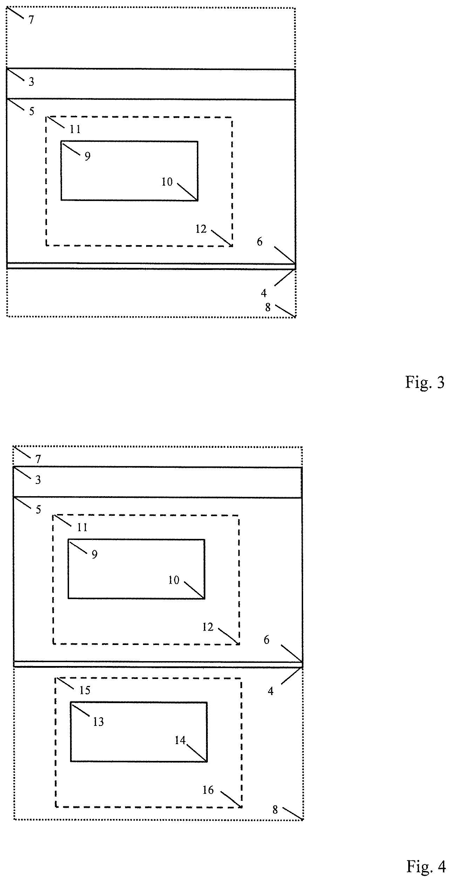

Because of the cross domain restrictions an application running in an iframe originating from the domain a.com may not read any data from a top page originating from the domain b.com. As shown in Fig. 3, an application running inside the iframe (the rectangle described by 11 as the upper left and 12 as the lower right corner) may only get the position and size of the layout element (see the rectangle described by 9 as the upper left and 10 as the lower right corner) relative to the upper left corner of the iframe 11. The position relative to the top page 7 or the browser viewport 5 is unknown.

As shown in Fig. 4, just disregarding the lack of information would produce the same deductions about the visibility of one layout element 9, 10 inside one iframe 11, 12 and another layout element 13, 14 inside another iframe 15, 16 that is obviously not visible to the user. Since online advertisements are often placed inside iframes to ensure encapsulation there is a strong need for a solution for this problem to get representative information about the visibility of an advertisement.

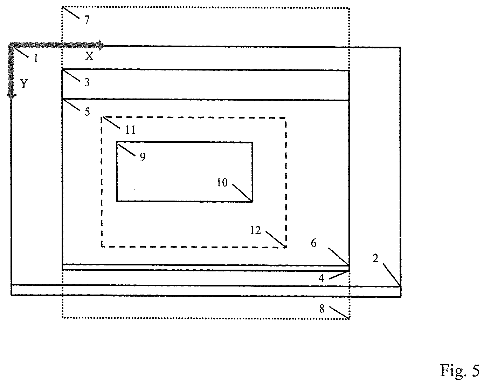

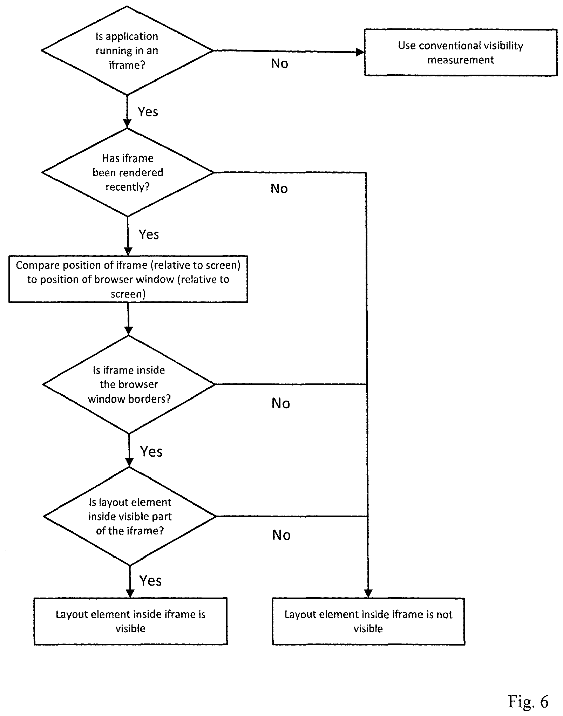

Referring to Fig. 5 and 6, further aspects of the method for signaling whether a part of a web page is visible to a user within a browser viewport of a browser window on a screen of the display device of the computer system are described.

As shown on Fig. 5, a process determines the position of a layout element inside an iframe that is located inside the browser viewport by determining the position of the iframe 11, 12 on one hand and the browser window 3, 4 on the other hand each relative to the upper left corner of the client screen 1, thereby determining a respective screen position. The upper left corner of the client screen composes a new origin of the coordinate system used (in a known approach the origin is set to the upper left corner of the webpage, 7 on Fig. 2).

In the approach proposed, the relative position of the iframe on the screen and the relative position of the browser window (not the browser viewport) on the screen each are properties belonging to the iframe so it is not necessary to access the top page. So, no conflict with cross site restrictions occurs.

Since the position of the browser window 3, 4 (e.g. the corner of the window itself) is not the same as the position of the browser viewport 5, 6 (the corner of the content area of the browser window) the size of elements of the browser window 3, 4 like a menu bar, a toolbar and / or a status bar may be taken into account when calculating the iframe position. In an embodiment, information data about an average size of the elements may be taken into account. An average size may be derived from analyzing a number of real browser windows, thereby, determining statistical data. These statistical data can be collected by recording the sizes of the menu bar, toolbar and / or status bar when executing a javascript outside of an iframe. This data collection can take place continually, e.g. while measuring online advertisements that are not placed inside an iframe, or in certain time intervals. The sizes of the menu bar, toolbar and / or status bar may differ depending on the used browser, operating system, user language or other criteria so the appropriate statistical size used in calculating the iframe position can be chosen based on the given criteria (which are available whether the script is executed in an iframe or not) in each case.

In versions of Mozilla Firefox the values may be computed as follows.

The distance of the upper left corner 4 of the browser window from the upper left corner 1 of the client screen is determined by the value of window.screenX (horizontal distance) and window.screenY (vertical distance) inside the iframe scope. The distance of the upper left corner of the iframe from the upper left corner 1 of the client screen is determined by the value of window.mozInnerScreenX (horizontal distance) and window.mozInnerScreenY (vertical distance) inside the iframe scope. The size of the browser window 3, 4 is determined by the value of window.outerWidth (width) and window.outerHeight (height) inside the iframe scope. The size of the iframe is determined by the value of window.innerWidth (width) and window.innerHeight (height) inside the iframe scope.

The approximate upper left corner 5 of the browser viewport is calculated with viewportX = window.screenX + approximateLeftBorderWidth (being the statistically determined average distance between the left edge of the viewport and the outer left edge of the browser window) and viewportY = window.screenY + approximateTopBorderHeight (being the statistically determined average distance between the top edge of the browser viewport 5, 6 and the outer top edge of the browser window 3, 4, typically composed by menu bar and toolbar).

The approximate size of the browser viewport 5, 6 is calculated with viewportWidth = window.outerWidth - approximateLeftBorderWidth - approximateRightBorderWidth (being the statistically determined average distance between the right edge of the browser viewport 5, 6 and the outer right edge of the browser window 3, 4) and viewportHeight = window.outerHeight - approximateTopBorderHeight - approximateBottomBorderHeight (being the statistically determined average distance between the bottom edge of the browser viewport 5, 6 and the outer bottom edge of the browser window 3, 4, typically composed by the status bar).

The computed position and size of the iframe is then compared to the computed position and size of the browser viewport 5, 6. If the iframe is completely outside the browser viewport 5, 6 the iframe and all of the iframe content is considered invisible. If the iframe is partly visible clipping values are calculated. For example if window.mozInnerScreenY is smaller than viewportY (which means that the iframe is clipped on the top side) a top clipping value is calculated with iframeClippingTop = viewportY - window.mozInnerScreenY. An iframe may be clipped on all four sides. If the iframe is fully visible all clipping values are zero.

Once, from the above procedure, it is determined if the iframe is (partially) visible the position and size of the layout element 9, 10 inside the iframe is taken into account, since the layout element may not be located inside the visible part of the iframe. Using the clipping values and the geometrical method described above (only in respect to the iframe instead of the browser viewport) it is possible to determine for any element inside the iframe if it is fully invisible, fully visible or which part of it is visible. By using the determined clipping values it is possible to get precise data about the partial visibility of an element. These precise data are a major benefit of the present invention because there are many applications where it is of interest which part of the element is visible (eg when optimizing online advertisements campaigns by fine-tuning the creative) or exactly how much of the area of an element became visible (eg when the payment for online advertisements is determined by reaching a certain visibility threshold).

Further, it is determined directly if the iframe content is visible in the browser viewport by checking if the iframe content has been rendered by the browser application. Most browser applications only render the content that is at least partially visible on the screen to improve the performance of the browser and any web applications. An invisible element does not receive an event notifying it about an imminent rendering. For visible elements rendering is done regularly. By checking the rendering of the iframe the present invention makes use visibility checks done by the browser. The present invention comprises catching the result of this visibility check by either (i) hooking into an event that gets called every time the iframe content is drawn (on current versions of Mozilla Firefox this event is named window.mozRequestAnimationFrame) or (ii) checking a counter that gets incremented every time a drawing is done (window.mozPaintCount on current versions of Mozilla Firefox). The additional use of the second method is necessary because the browser window containing the iframe containing the layout element may be covered by another window on the screen or the browser tab containing the browser viewport may be switched into the background because another browser tab is shown in the foreground.

In an embodiment a function may be set up that gets called in certain fixed time intervals, e.g. by registering the function with window.setTimeout or window.setInterval in javascript. The time interval may be one second. The function may then check how often window.mozPaintCount got incremented since the last function call or how often a function registered with window.mozRequestAnimationFrame (in recent Firefox browsers, in other browsers it may be window.requestAnimationFrame for Internet Explorer 10 or recent Chrome versions or window.webkitRequestAnimationFrame for recent Safari versions) got called since the last function call. The counted number of events is then compared to a benchmark value that is determined beforehand by observing the behaviour of visible and invisible elements or iframes on different browsers in different environments such as slower or faster client computers, different web pages, different operation systems, different internet connections etc. If the counted number of events is below the benchmark value, the element or iframe is considered invisible, if it is equal or above the value it is considered visible.

Another variant of the second process comprises using an event in a flash plugin that occurs every time the flash movie is rendered calling an actionscript function associated with that event (e.g. ENTER_FRAME). By counting the number of times this function is called one can determine if the flash is completely invisible or partly visible.

Another embodiment of the second process may comprise measuring the time a certain operation in the browser takes. This operation could be running operations in browser plugins like Adobe Flash or inside Java applets, drawing in WebGL contexts (especially using hardware-accelerated commands) or using hardware-accelerated browser features like 3D transformations. Some of these operations will run faster if they affect elements that are visible on the user screen. Other operations will not run at all if they would not produce any output on the user screen.

Still another embodiment of the second process may comprise counting how often certain events take place inside the browser. This event could be running a timer (eg with setTimeout or setInterval) or registering an event handler for any rendering-related events. If the element that is corresponding with the measured event is visible on the user screen the event will happen more often. The numbers determined in this way have to be compared with a benchmark value. Another variant of the second process comprises using a combination of the events or operations mentioned above and comparing the results to a combined benchmark value.

The combination of different methods has the advantage of providing usable data in more cases. For example using a method utilizing a flash plugin has the advantage of being independent of the used browser but the disadvantage that the flash plugin may not always be present (installed by the user). By using the flash plugin in combination with other methods described above it is possible to achieve successful measurements in more cases than when using just one of the methods. Depending on the operation system type and version and browser type and version different methods may or may not provide relevant data so combining a sufficient set of methods is crucial to successfully getting useful data in most cases.

Finally the results of both methods are combined (see Fig. 6). Only if there was a recent rendering event and if the iframe is visible the layout element is reported as visible.

Combining determined information from both methods in a multistep process will produce improved results than using just one of the methods. Using just the first method will give information about whether the measured element is inside the browser viewport 4, 5 or not and which part is inside the browser viewport 4, 5. But, it does not give sufficient information about whether the browser window 3, 4 itself is visible or if it is hidden behind other windows or the browser tab the page is opened in is inactive. Using just the second method will provide information about whether the iframe is visible on the client screen 1, 2. It will not give sufficient information whether the iframe is fully visible on the client screen 1, 2 and if it is just partly visible which part of the iframe is visible on the screen 1, 2.

In another embodiment, the gathered information about the visibility of elements may be used for computing the visibility of elements where a measurement is not possible or fails. A measurement may for example not be possible because the browser application does not support necessary features, those features are deactivated by the user or the duration of the page visit is too short to collect the necessary data. It is also possible to introduce sampling, i.e. measuring only every nth case, especially to provide a more cost-efficient service. In these cases the data collected using the methods detailed above can be statistically extrapolated for the cases where data is missing. The statistical extrapolation can be done for the calculated results, e.g. the relative number of visible elements, or for any data used in the calculation. The latter approach can be used if only certain data is available to complete the necessary data to allow a calculation using the methods detailed above.

The statistical extrapolation of data may be improved by clustering the data. For example the visibility of a certain element during a 14-second visit on page www.xy.com/home/index.html can be determined by calculating the average visibility of the same elements on the same page during visits with a duration of 13 to 15 seconds where a measurement could be accomplished.

For an efficient clustering of the data it may be necessary to know which page the iframe the measurement takes place in is situated on. For single iframes, i.e. iframes that are directly placed in the top page, this information may be determined by reading the document.referrer property inside the iframe scope. This method does not return any valid information if the user navigated to another page inside the iframe or if there are multiple iframes inside each other. For measurement of online advertisement campaigns the latter case is very frequent. In this case the present invention uses a special application of the iframe buster solution mentioned above. Because it is usually not possible to set up iframe busters in all occurring top page domains iframe busters are set up in the topmost iframe (the iframe that is directly placed in the top page). Inside this iframe the value of document.referrer can be used to get the url of the top page. When running measurements during online advertisements campaigns the topmost iframes are usually produced by adservers operated by the top page publishers or saleshouses. These adservers operate on a small number of top level domains like double-click.com. For the present invention it is necessary to set up iframe busters on this small number of top level domains thus mitigating the expenses for setting up a conventional iframe buster solution.

The features disclosed in this specification, the figures and / or the claims may be material for the realization of various embodiments, taken in isolation or in various combinations thereof.

## Claims

1. Computer-implemented method, comprising the steps of running a web browser application on a computer system and signaling whether a part of a web page is visible to a user within a browser viewport of a browser window on a screen of a display device of the computer system, wherein the part is loaded inside an inline frame of the web page, the step of signaling comprising:
- determining position data indicative of positional information on a position of the inline frame on the screen;
- deriving an average size of at least one element of the browser window selected from a group of elements, the group being made of a menu bar, a tool bar and a status bar, and the average size of the at least one element being derived from recording the size of the menu bar, the tool bar and / or the status bar for a number of real browser windows, thereby, determining statistical data, wherein, since the position of the browser viewport is different from the position of the browser window, a step of determining a screen position of the browser viewport comprises taking into account the average size of the at least one element of the browser window;
- determining whether the part of the web page is located within the browser viewport, based on the position data and the statistical data; and
- outputting a visibility signal for the part of the web page, if yes;
wherein the step of determining position data comprises determining a screen position of the browser window and determining a screen position of the inline frame, comprising:
- determining, inside a scope of the inline frame, a distance of a upper left corner of the browser window from an upper left corner of the screen;
- determining, inside the scope of the inline frame, a distance of an upper left corner of the inline frame from the upper left corner of the screen;
- determining, inside the scope of the inline frame, a size of the browser window; and
- determining, inside the scope of the inline frame, a size of the inline frame;
wherein the screen position of the browser viewport is determined based on a screen position of the browser window, comprising:
- statistically determining the following:
- a first horizontal average distance between a left edge of the browser viewport and an outer left edge of the browser window;
- a first vertical average distance between a top edge of the browser viewport and an outer top edge of the browser window;
- a second horizontal average distance between a right edge of the browser viewport and an outer right edge of the browser window; and
- a second vertical average distance between a bottom edge of the browser viewport and an outer bottom edge of the browser window;
- determining an approximate upper left corner of the browser viewport from:
- a horizontal position corresponding to an addition of the first horizontal average distance and a horizontal distance of the left edge of the browser window from a left edge of the screen; and
- a vertical position corresponding to an addition of the first vertical average distance and a vertical distance of the top edge of the browser window from a top edge of the screen; and
- determining an approximate size of the browser viewport from:
- a width corresponding to a subtraction of the first and second horizontal average distances from the outer width of the browser window; and
- a height corresponding to a subtraction of the first and second vertical average distances from the outer height of the browser window; and
wherein the step of determining whether the part of the web page is located within the viewport comprises the steps of:
- determining whether the inline frame is located within the viewport; and
- determining whether the part of the web page is located within the inline frame.

2. The method according to claim 1, further comprising determining rendering data indicative of rendering information on processes of rendering the inline frame by the web browser application.

3. The method according to claim 2, wherein the step of determining rendering data comprises hooking into an event that gets called every time content of the inline frame is drawn.

4. The method according to claim 2 or 3, wherein the step of determining rendering data comprises checking a count that is incremented every time the inline frame is drawn.

5. A method for monitoring whether a part of a web page is visible to a user, comprising the steps of:
- augmenting the part of the web page with a script element;
- serving the augmented part of the web page to a web browser;
- receiving a visibility signal for the part of the web page; and
- storing the visibility signal in a database;
wherein the script element, when executed on a computer, implements a method according to at least one of the preceding claims.

6. Device for signaling whether a part of a web page is visible to a user within a browser viewport of a browser window on a screen of a display device of the computer system on which a browser application is running, wherein the part is loaded inside an inline frame of the web page, the device configured to perform the method according to any of the preceding claims.

## Patentansprüche

1. Computerimplementiertes Verfahren, umfassend die Schritte des Ausführens einer Webbrowseranwendung auf einem Computersystem und des Signalisierens, ob ein Teil einer Webseite für einen Benutzer innerhalb eines Browseransichtsfelds eines Browserfensters auf einem Bildschirm einer Anzeigevorrichtung des das Computersystems sichtbar ist, wobei der Teil in einen Inline-Frame der Webseite geladen wird, wobei der Schritt des Signalisierens umfasst:
- Bestimmen von Positionsdaten, die Positionsinformationen über eine Position des Inline-Frames auf dem Bildschirm angeben;
- Ableiten einer Durchschnittsgröße mindestens eines Elements des Browserfensters, ausgewählt aus einer Gruppe von Elementen, wobei die Gruppe aus einer Menüleiste, einer Symbolleiste und einer Statusleiste besteht, und die Durchschnittsgröße des mindestens einen Elements abgeleitet wird aus einem Aufzeichnen der Größe der Menüleiste, der Symbolleiste und/oder der Statusleiste für eine Anzahl von realen Browserfenstern, wodurch statistische Daten bestimmt werden, wobei, da sich die Position des Browseransichtsfelds von der Position des Browserfensters unterscheidet, ein Schritt des Bestimmens einer Bildschirmposition des Browseransichtsfelds Berücksichtigen der Durchschnittsgröße des mindestens einen Elements des Browserfensters umfasst;
- Bestimmen, ob sich der Teil der Webseite innerhalb des Browseransichtsfelds befindet, basierend auf den Positionsdaten und den statistischen Daten; und
- Ausgeben eines Sichtbarkeitssignals für den Teil der Webseite, falls ja;
wobei der Schritt des Bestimmens von Positionsdaten Bestimmen einer Bildschirmposition des Browserfensters und Bestimmen einer Bildschirmposition des Inline-Frames umfasst, umfassend:
- Bestimmen, in einem Bereich des Inline-Frames, eines Abstands einer oberen linken Ecke des Browserfensters von einer oberen linken Ecke des Bildschirms;
- Bestimmen, im Bereich des Inline-Frames, eines Abstands einer oberen linken Ecke des Inline-Frames von der oberen linken Ecke des Bildschirms;
- Bestimmen, im Bereich des Inline-Frames, einer Größe des Browserfensters; und
- Bestimmen, im Bereich des Inline-Frames, einer Größe des Inline-Frames;
wobei die Bildschirmposition des Browseransichtsfelds basierend auf einer Bildschirmposition des Browserfensters bestimmt wird, umfassend:
- statistisches Bestimmen des Folgenden:
- eines ersten horizontalen Durchschnittsabstands zwischen einem linken Rand des Browseransichtsfelds und einem äußeren linken Rand des Browserfensters;
- eines ersten vertikalen Durchschnittsabstands zwischen einem oberen Rand des Browseransichtsfelds und einem äußeren oberen Rand des Browserfensters;
- eines zweiten horizontalen Durchschnittsabstands zwischen einem rechten Rand des Browseransichtsfelds und einem äußeren rechten Rand des Browserfensters; und
- eines zweiten vertikalen Durchschnittsabstands zwischen einem unteren Rand des Browseransichtsfelds und einem äußeren unteren Rand des Browserfensters;
- Bestimmen einer ungefähren oberen linken Ecke des Browseransichtsfelds aus:
- einer horizontalen Position, die einer Addition des ersten horizontalen Durchschnittsabstands und eines horizontalen Abstands des linken Randes des Browserfensters von einem linken Rand des Bildschirms entspricht; und
- einer vertikalen Position, die einer Addition des ersten vertikalen Durchschnittsabstands und eines vertikaler Abstand des oberen Randes des Browserfensters von einem oberen Rand des Bildschirms entspricht; und
- Bestimmen einer ungefähren Größe des Browseransichtsfelds aus:
- einer Breite, die einer Subtraktion des ersten und zweiten horizontalen Durchschnittsabstands von der Außenbreite des Browserfensters entspricht; und
- einer Höhe, die einer Subtraktion des ersten und zweiten vertikalen Durchschnittsabstands von der Außenhöhe des Browserfensters entspricht; und
wobei der Schritt des Bestimmens, ob sich der Teil der Webseite innerhalb des Ansichtsfensters befindet, die Schritte umfasst:
- Bestimmen, ob sich der Inline-Frame innerhalb des Ansichtsfensters befindet; und
- Bestimmen, ob sich der Teil der Webseite innerhalb des Inline-Frames befindet.

2. Verfahren nach Anspruch 1, ferner umfassend Bestimmen von Renderdaten, die Renderinformationen über Prozesse des Renderns des Inline-Frames durch die WebbrowserAnwendung angeben.

3. Verfahren nach Anspruch 2, wobei der Schritt des Bestimmens von Renderdaten Einhaken in ein Ereignis umfasst, das jedes Mal aufgerufen wird, wenn der Inhalt des Inline-Frames gezeichnet wird.

4. Verfahren nach Anspruch 2 oder 3, wobei der Schritt des Bestimmens von Renderdaten Überprüfen eines Zählwerts umfasst, der jedes Mal inkrementiert wird, wenn der Inline-Frame gezeichnet wird.

5. Verfahren zur Überwachung, ob ein Teil einer Webseite für einen Benutzer sichtbar ist, umfassend die Schritte:
- Erweitern des Teils der Webseite mit einem Skriptelement;
- Bereitstellen des erweiterten Teils der Webseite an einen Webbrowser;
- Empfangen eines Sichtbarkeitssignals für den Teil der Webseite; und
- Speichern des Sichtbarkeitssignals in einer Datenbank;
wobei das Skriptelement, wenn es auf einem Computer ausgeführt wird, ein Verfahren gemäß mindestens einem der vorhergehenden Ansprüche implementiert.

6. Vorrichtung zum Signalisieren, ob ein Teil einer Webseite für einen Benutzer innerhalb eines Browseransichtsfelds eines Browserfensters auf einem Bildschirm einer Anzeigevorrichtung des Computersystems, auf dem eine Browseranwendung ausgeführt wird, sichtbar ist, wobei der Teil in einen Inline-Frame der Webseite geladen ist, wobei die Vorrichtung konfiguriert ist, das Verfahrens nach einem der vorhergehenden Ansprüche durchzuführen.

## Revendications

1. Procédé implémenté par ordinateur, comprenant les étapes consistant à exécuter une application de navigateur Web sur un système informatique et signaler si une partie d'une page Web est visible à un utilisateur à l'intérieur d'un port de visualisation de navigateur d'une fenêtre de navigateur sur un écran d'un dispositif d'affichage du système informatique, dans lequel la partie est chargée à l'intérieur d'un cadre en ligne de la page Web, l'étape de signalisation comprenant de :
- déterminer des données de position indiquant l'information de position sur une position du cadre en ligne sur l'écran ;
- déduire une taille moyenne d'au moins un élément de la fenêtre de navigateur sélectionnée parmi un groupe d'éléments, le groupe étant composé d'une barre de menu, une barre d'outils et une barre de statut, et la taille moyenne d'au moins un élément étant déduite de l'enregistrement de la taille de la barre de menu, la barre d'outils et/ou la barre de statut pour un nombre de fenêtres de navigateur réel, en déterminant ainsi des données statistiques, dans lequel, puisque la position du port de visualisation du navigateur est différente de la position de la fenêtre de navigateur, une étape de détermination d'une position d'écran du port de visualisation de navigateur comprend de prendre en compte la taille moyenne d'au moins un élément de la fenêtre de navigateur ;
- déterminer si la partie de la page Web est située à l'intérieur du port de visualisation du navigateur, sur la base des données de position et des données statistiques ; et
- émettre un signal de visibilité pour la partie de la page Web, si c'est le cas ;
dans lequel l'étape de détermination des données de position comprend de déterminer une position d'écran de la fenêtre de navigateur et de déterminer une position d'écran du cadre en ligne, comprenant de :
- déterminer, à l'intérieur d'un périmètre du cadre en ligne, une distance d'un coin gauche supérieur de la fenêtre de navigateur par rapport à un coin gauche supérieur de l'écran ;
- déterminer, à l'intérieur du périmètre du cadre en ligne, une distance d'un coin gauche supérieur du cadre en ligne par rapport au coin gauche supérieur de l'écran ;
- déterminer, à l'intérieur du périmètre du cadre en ligne, une taille de la fenêtre de navigateur ; et
- déterminer, à l'intérieur du périmètre du cadre en ligne, une taille du cadre en ligne ; dans lequel la position d'écran du port de visualisation du navigateur est déterminée sur la base d'une position d'écran de la fenêtre de navigateur, comprenant de :
- déterminer statistiquement ce qui suit :
- une première distance moyenne horizontale entre un bord gauche du port de visualisation de navigateur et un bord gauche extérieur de la fenêtre de navigateur ;
- une première distance moyenne verticale entre un bord supérieur du port de visualisation de navigateur et un bord supérieur extérieur de la fenêtre de navigateur ;
- une seconde distance moyenne horizontale entre un bord droit du port de visualisation de navigateur et un bord droit extérieur de la fenêtre de navigateur ; et
- une seconde distance moyenne verticale entre un bord inférieur du port de visualisation de navigateur et un bord inférieur extérieur de la fenêtre de navigateur ;
- déterminer un coin gauche supérieur approximatif du port de visualisation de navigateur d'après :
- une position horizontale correspondant à une addition de la première distance moyenne horizontale et une distance horizontale du bord gauche de la fenêtre de navigateur à partir d'un bord gauche de l'écran ; et
- une position verticale correspondant à une addition de la première distance moyenne verticale et une distance verticale du bord supérieur de la fenêtre de navigateur à partir d'un bord de l'écran ; et
- déterminer une taille approximative du port de visualisation de navigateur d'après :
- une largeur correspondant à une soustraction de la première et la seconde distance moyenne horizontale de la largeur extérieure de la fenêtre de navigateur ; et
- une hauteur correspondant à une soustraction de la première et la seconde distance moyenne verticale de la hauteur extérieure de la fenêtre de navigateur ; et
dans lequel l'étape de détermination que la partie de la page Web est située à l'intérieur du port de visualisation comprend les étapes consistant à :
- déterminer si le cadre en ligne est situé à l'intérieur du port de visualisation ; et
- déterminer si la partie de la page Web est située à l'intérieur du cadre en ligne.

2. Procédé selon la revendication 1, comprenant en outre de déterminer des données de restitution indiquant une information de restitution sur des processus de restitution du cadre en ligne par l'application de navigateur Web.

3. Procédé selon la revendication 2, dans lequel l'étape de détermination des données de restitution comprend de s'intégrer à un événement qui est appelé chaque fois qu'un contenu du cadre en ligne est tracé.

4. Procédé selon la revendication 2 ou 3, dans lequel l'étape de détermination des données de restitution comprend de vérifier un comptage qui est implémenté chaque fois que le cadre en ligne est tracé.

5. Procédé de surveillance du fait qu'une partie d'une page Web est visible à un utilisateur, comprenant les étapes consistant à :
- augmenter la partie de la page Web avec un élément de script ;
- desservir la partie augmentée de la page Web à un navigateur Web ;
- recevoir un signal de visibilité pour la partie de la page Web ; et
- mémoriser le signal de visibilité dans une base de données ;
dans lequel l'élément de script, lorsqu'il est exécuté sur un ordinateur, implémente un procédé selon au moins une des revendications précédentes.

6. Dispositif de signalisation qu'une partie d'une page Web est visible à un utilisateur à l'intérieur d'un port de visualisation de navigateur d'une fenêtre de navigateur sur un écran d'un dispositif d'affichage du système informatique sur lequel une application de navigateur est en train de s'exécuter, dans lequel la partie est chargée à l'intérieur d'un cadre en ligne de la page Web, le dispositif étant configuré pour mettre en oeuvre le procédé selon une quelconque des revendications précédentes.
